# EUROPEAN PATENT APPLICATION

(11) **EP 4 478 002 A1**
(43) Date of publication of application: **18.12.2024**
(21) Application number: 23382579.3
(22) Date of filing: 12.06.2023
(51) Int. Cl.: G01D 5/353, G01D 5/26, B64D 45/00

(54) **CENTRALIZED SENSOR INTERROGATION UNIT FOR AIRCRAFTS**

(71) Applicant: AIRBUS OPERATIONS, S.L.U., 28906 Getafe (Madrid) (ES)
(72) Inventor: MIGUEL GIRALDO, Carlos, 28906 GETAFE (Madrid) (ES)
(74) Representative: Herrero & Asociados, S.L.

(57) **Abstract**

System (100) for an aircraft (1000) configured to obtain one or more aircraft functionalities, the system comprising an aircraft computer (110), the system (100) characterized by comprising one or more optical fiber sensors (120) measuring one or more physical parameters, one or more optical fibers (130) connecting the one or more optical fiber sensors (120) to an interrogation unit (140), the interrogation unit (140) configured to receive light-pulsed data from the one or more optical fiber sensors (120) via the one or more optical fibers (130), process the light-pulsed data to obtain one or more values of physical parameters by applying a transfer function and convert the one or more values of physical parameters into digital data, and digital transmission means (150) configured to transmit the digital data to the aircraft computer (110), wherein the aircraft computer (110) is configured to obtain the one or more aircraft functionalities based on the digital data.

## Description

### Object of the invention

The present invention refers to a system for an aircraft configured to obtain aircraft functionalities and to an aircraft comprising said system.

The field of invention falls within aircraft sensors, aircraft systems architecture, aircraft structural health monitoring and aircraft safety.

### Background of the invention

Aircrafts today are equipped with multiple complex systems to operate an aircraft efficiently and safely. Each aircraft system has a mission or f unction that is required for performance and safety of the aircraft. The breakdown of different systems, the decomposition of the complex product into layers facilitates the design and constructions of complex aircraft systems into interdependent manageable simpler systems. All the aircraft systems are technically categorized by Air Transportation Association (ATA) using a numbering system to understand the technical features and it is universally used in aircraft engineering and aircraft maintenance. They numbering system is called the ATA chapters and are applicable for all aircrafts manufacturers. Despite this working methodology trying to afford complex problems by divisions, disadvantageously, the systems in the modern aircraft do not stand alone and their performance must be considered in the aircraft as a whole. The aircraft systems require inter-relations and interdependencies, and this is in fact the final functions creating the high performance and safety of the aircraft. For instance, pneumatic system (ATA 36) is related to the following systems: Air conditioning (ATA 21), wing and engine anti-icing (ATA 30), Engine start (ATA 80), thrust reverser (ATA 78), hydraulic reservoir pressurization (ATA 29) or water tank pressurization and toilet waste (ATA38).

Any aircraft system is typically composed of three major components: equipment (i.e.: pumps, valves, source of energy, distribution lines, pipes...), measurement devices (sensors, transducers, wires ...) and control units (computer hardware with embedded software). Apart from that, aircraft systems are interconnected by data buses and the central aircraft computers manage input and outputs among the different systems. The increasing level of sophistication and inter-relation of the aircraft systems is making system development process more difficult and the capture all of the requirements and interdependencies a very laborious task. Disadvantageously, multiples wires are needed for communication between the aircrafts systems and the avionics racks.

Hence, there is a demand for simplifying the current aircraft systems and fulfill many ATA chapters.

The present invention satisfies this demand.

### Description of the invention

The present invention refers to a system for an aircraft with capability to continuously monitor many optical fiber sensors in the aircraft associated to aircraft functions as e.g., ATA chapters.

The invention responds to the demand for simplifying complex aircraft systems by sharing resources among many systems that permit reducing aircraft hardware and software, increasing redundancy and performance, decreasing the maintenance costs.

The interrogation unit according to the present invention can be associated to diverse functions, with capability to interrogate many optical sensors connected to many aircraft systems and hence fulfilling many ATA chapters. The information of all these optical fiber sensors can be processed and distributed by an interrogation unit.

Hence a first aspect according to the present invention refers to a system for an aircraft configured to obtain one or more aircraft functionalities. The system comprises an aircraft computer, one or more optical fiber sensors measuring one or more physical parameters and one or more optical fibers connecting the one or more optical fiber sensors to the interrogation unit.

The interrogation unit can be configured to receive light-pulsed data from the one or more optical fiber sensors via the one or more optical fibers, process the light-pulsed data to obtain one or more values of physical parameters by applying a transfer function and convert the one or more values of physical parameters into digital data, and digital transmission means configured to transmit the digital data to the aircraft computer, wherein the aircraft computer is configured to obtain the one or more aircraft functionalities based on the digital data.

In one example, the one or more physical parameters comprise strain and/or temperature and/or acceleration and/or ultrasonic guided waves and/or gas detection and the one or more aircraft functionalities are related to structural health monitoring functions. The aircraft structural health monitoring functions can comprise e.g. load, overload, damage in a load path, disbond in adhesive lines, structural damage, failures of bearings, impacts, lightning strikes, corrosion damage, maintenance actions, limitations of operational maneuvers, noise, correlations between failures and degradation and parameters in flight, etc.

In one example, the one or more physical parameters comprise temperature and/or pressure and/or O2 concentration and the one or more aircraft functionalities are related to aircraft fuel system parameters. The aircraft fuel system parameters can comprise aircraft level, aircraft safety condition and correlation between operational service and fuel consumption.

In one example, the one or more physical parameters comprise temperature and/or pressure and the one or more aircraft functionalities are related to aircraft pneumatic system parameters. The aircraft pneumatic system parameters comprise aircraft leaks and aircraft overheating.

In one example, the one or more physical parameters comprise temperature, the one or more aircraft functionalities are related to aircraft fire detection system parameters and the one or more optical fiber sensors (120) are made of silica waveguide or sapphire waveguide for higher operating temperatures above 1000°c.The aircraft fire detection system parameters comprise detection of fire in the aircraft.

In one example, the one or more physical parameters comprise temperature and the one or more aircraft functionalities are related to ice system parameters of the aircraft.

In one example, the aircraft ice system parameters comprise detection of ice in the aircraft.

In one example, the one or more physical parameters comprise temperature, humidity, ice concentration and O2 concentration are related to environmental control system of the aircraft.

In particular examples, the one or more optical fiber sensors comprise e.g. Fiber Bragg Gratings and/or Fiber Perot and/or luminescent sensors and/or distributed sensors based on light scattering and/or twisted glass optical fiber segment suitable for very high temperatures above 1000°c.

In particular examples, the one or more optical fibers comprise single mode fibers, multimode fibers, ribbon fibers and/or multicore fibers.

Another aspect of the present invention relates to an aircraft comprising the system according to the first aspect of the present invention.

A third aspect of the present invention relates to a method for obtaining one or more aircraft functionalities in an aircraft. The method comprises measuring one or more physical parameters by one or more optical fiber sensors, connecting the one or more optical fiber sensors to an interrogation unit by one or more optical fibers, receiving by the interrogation unit light-pulsed data from the one or more optical fiber sensors, obtaining by the interrogation unit one or more values of physical parameters by processing the light-pulsed data. In this respect, the processing of the light-the pulsed data comprises applying a transfer function. Furthermore, the method comprises converting by the interrogation unit the one or more values of physical parameters into digital data, transmitting by digital transmission means the digital data to an aircraft computer and obtaining by an aircraft computer the one or more aircraft functionalities based on the digital data.

Since all the measurements of physical parameters are received by the interrogation unit, the possibility of operating/synchronizing/merging data associated with aircraft functionalities by the aircraft computer is enormous. The proposed system and method can obtain new values of physical parameters that can provide new detection capabilities, such as parameters indirectly related to damage or degradation of the structure in the aircraft that can be associated with the number of flights and/or operating conditions of the aircraft. In turn, once the relationships between the physical parameters have been established by the aircraft computer, the result of the combination of parameters becomes an additional way of checking the reliability of the data or detection of false alarms in the aircraft. These possibilities of combining and checking data associated with physical parameters can be made even greater if the data is compared between different aircrafts. The ability to obtain robust, mature and easily comparable data from the aircraft would also facilitate the use of artificial intelligence for data analysis and extraction of key information to optimize the maintenance process.

The main advantages of the presentation are:
- Aircraft resources are shared creating integrated modular multi systems (multi-ATA system scenario).
- Communication between sensors and the interrogation unit is based on optical links where electromagnetic interference, EMI issues are mitigated and highly bandwidth can be supported (Gbit/s).
- Capability to simplify and reduce aircraft hardware systems, communication data buses and costs. The interrogation unit can acquire and process many different sensors associated to many physical parameters monitoring many different conditions of the aircraft.
- Reduction of the development/test validation/implementation/installation duplications activities costs (i.e.: installing the wiring/fibers).
- Increase of the interchangeability between aircraft systems and the possibility to replace sensors or cables with minimal effect.
- Significant weight reduction in terms of sensors, cables and aircraft hardware. Potential to optimize the number and position of sensors in the aircraft. Optical fibers are lighter to wire cables. Less number of cables due to multiplexing capabilities of Optical Fiber Sensors (OFS), possibility to use ribbon fibers and the use of multicore optical fibers.
- The costs of this interrogation unit and sensors are spread over many applications and functions and hence the business case justification can be easier to demonstrate.
- Optical sensors can cover two different approaches: hotspots areas and global monitoring. These approaches in terms of structural health monitoring allow that the system can monitor discrete areas for localized damage or large areas for a full damage image. Both strategies will enable to know in real time the status of the structural integrity and give maintainers early warnings of parts that need repaired or replaced.
- The use of similar optical fiber sensing technologies following different integration process will ensure passive, reliable, and robust sensors in accordance with the requirements, locations and functions and it will enable to promote the development of these disciplines, accelerate the technology readiness level and reduce the costs.
- Since all the measurements are performed by a single interrogation unit, the homogeneity of the data and the temporal alignment is easier to get.
- Since part of the sensors are dedicated to the monitoring or measurement of the environment, the environmental effect compensation and noise subtraction can be easier and well understood.
- Since all the measurements are acquired for the same interrogation unit the possibility to combine measurements (data fusion) and create new parameters for new sensing needs that cannot be obtained when using a single sensor can be easier.
- The data combination of physical parameters will increase the confidence on the measurements, help to detect sensor failure by other sensors (self-diagnosis by algorithms using the signal of the different sensors), reduce the ambiguity and help to minimize the false call alarms.
- The redundancy of the optical fiber sensors is easier in the way that if a sensor fails a diagnostic and prognostic assessment can still be obtained using the remaining optical fiber sensors.
- In terms of Structural Health Monitoring (SHM), the interrogation unit will integrate several techniques in the same hardware: strain/load monitoring, vibration-based methods and ultrasonic guided wave-based techniques (acoustic emission).
- Structural health monitoring can be particularly attractive in structural areas of the aircraft where access for conventional Non-Destructive Tests (NDT) inspection is difficult and costly, eliminating the need to remove items to gain access to inspection areas such as panels, ducts, blankets, etc.
- The process to compare this data in different times of the aircraft life, among different positions and considering the complete fleet and even their flight routes study can help the designers to understand failures modes, predict failures time and estimate and select the optimum stops at preferred maintenance centers for the maintenance actions before failure occurs.
- These flight data aim to be main drivers for operators using global monitoring system in their fleets can easier generate the in-service necessary data to secure the demonstration of extended operations approvals.
- Since these measurements are done based on optical fiber technologies and using different technology than many of the classical sensors in the aircraft, the golden rule of dissimilarity is directly applied in terms of redundancy and the probability to have a common mode failure with the conventional ones can be drastically reduced.
- Apart from the online monitoring approach since sensors and interrogation unit are onboard, it can be possible to have an offline approach for those applications where is most convenient, for instance, to monitor structural degradation over a longer time period, such as after a set number of operational flights, where it could be selected not continuous monitoring, but instead on fixed-interval measurements to allow for selected time to time comparisons.
- Flexibility regarding ATA design changes or simplification of the qualification/certification process of any new parameters/functions to be incorporated to the platform due to the capability to use partial certification credits that multisystem had obtained previously for other functions from authorities.

### Brief description of the drawings

For a better understanding of the above explanation and for the sole purpose of providing an example, some non-limiting drawings are included that schematically depict a practical embodiment.
Figure 1 shows the system according to the present invention and an aircraft comprising the system.
Figure 2 shows elements of the system according to the present invention.

### Description of the detailed embodiment

The system (100) comprises optical fiber sensors (120) located and installed across the aircraft (1000). The optical fiber sensors (120) can measure a plurality of physical parameters that can cover several aircraft functions. The parameters can be processed to obtain aircraft functionalities. The measurements of the optical fiber sensors (120) are associated to different aircraft systems such as structural health monitoring, pneumatic system, engine monitoring, ice and fire detection or fuel monitoring.

The optical fiber sensors (120) can comprise Fiber Bragg Gratings, Fiber Perot and/or luminescent sensors, and/or distributed sensors based on light scattering covering many aircraft functions and provide pulsed-light data tan can be converted into physical measurements as e.g., strain, temperature, vibrations, humidity, lightning, impacts, icing, fire, pressures, ...). Furthermore, the optical fiber sensors (120) can comprise twisted glass optical fiber segment suitable for very high temperatures above 1000°c

The system (100) comprises a plurality of optical fibers (130) connecting the plurality of optical fiber sensors (120) to an interrogation unit (140) by digital transmission means (150). The plurality of optical fibers comprises single mode fibers, multimode fibers, ribbon fibers and/or multicore fibers.

The interrogation unit (140) including data processing functions is configured to receive the light-pulsed data from the plurality of optical fiber sensors (120) via the plurality of optical fibers (130), process the light-pulsed data to obtain a plurality of values of physical parameters by applying a transfer function and convert the plurality of values of physical parameters into digital data.

The interrogation unit (140) can receive data from the optical sensors, process the data, apply the adequate transfer function with compensate factors and finally transmit the digital information to the aircraft computer (110) in Avionics Bay, hosting several ATA application software-core processing Input & Output Module (CPIOM) and/or displays the data into the cockpit. The outputs of this interrogation unit can be physical measurements or include also specific diagnostic and prognostic data processing for decision making. The measurement the interrogation unit can manage can be e.g.: temperature, flow, liquid level, pressure, strain/load, acceleration, impact detection, gases detection or positions, etc. The sensors can play a crucial role in this system by providing the necessary measurement data to the interrogation unit (140).

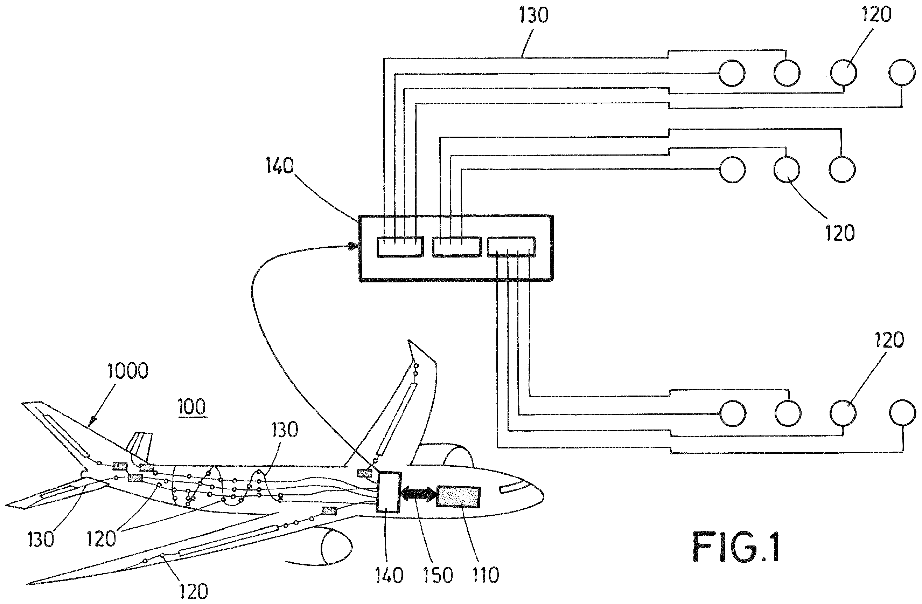

The digital transmission means (150) configured to transmit the digital data to the aircraft computer (110) as shown in the interior of the aircraft (1000) in figure 1. The digital transmission means (150) is configured to send the effective information related to the flight conditions and safety to the aircraft computer (110). In one example, the digital transmission means (150) comprise Ethernet.

The aircraft computer (110) is configured to obtain the plurality of aircraft functionalities based on the digital data associated with the values of physical parameters provided by the interrogation unit (140).

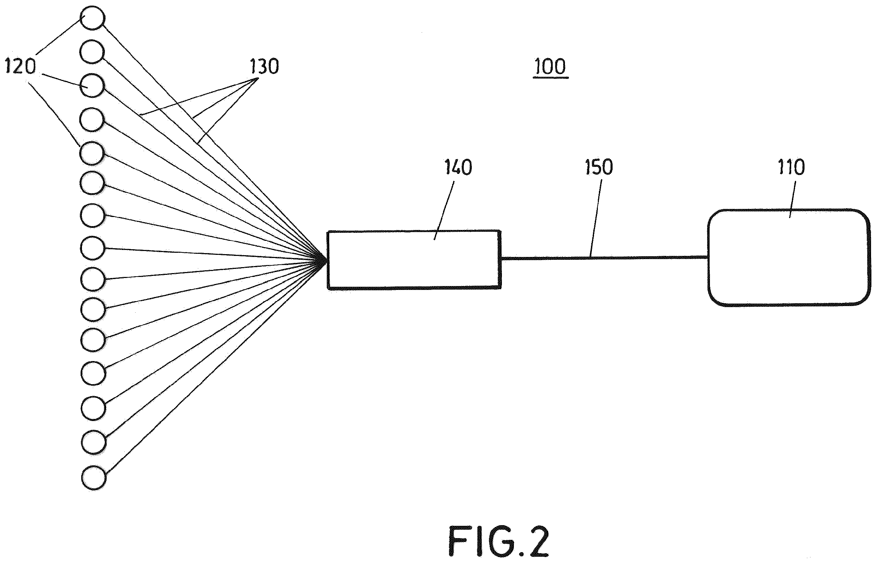

Figure 2 shows the system (100) comprising the plurality of optical fiber sensors (120) measuring physical parameters, the plurality of optical fibers (130) connecting the plurality of optical fiber sensors (120) to the interrogation unit (140), and the digital transmission means (150) (e.g. Ethernet) configured to transmit the digital data associated with the physical parameters to the aircraft computer (110) configured to obtain the plurality of aircraft functionalities based on the digital data.

The interrogation unit (140) comprises real time data processing algorithms software to perform diagnostic and prognostic functions based on the inputs signals from the optical fiber sensors (120) from the aircraft (1000) and provide outputs to the control system of the aircraft (1000). The digital transmission means (150) send the effective information related to the flight conditions and safety to the aircraft computer (110).

The system (100) can continuously acquire, gather and manage all the data coming from the optical fiber sensors (120) located remotely around the aircraft (1000). The functions of the optical fiber sensors (120) can be associated to different aircraft systems such as structural health monitoring, pneumatic system, engine monitoring, fire and ice detection or fuel monitoring. Some aircraft functions managed by the system (100) according to the present invention can be summarized as:

### STRUCTURAL HEALTH MONITORING FUNCTIONS

In terms of structural health management, the system (100) obtains the following aircraft functionalities to detect in advance any signals related to the main causes of accidents related to structures i.e.: fatigue, corrosion, accidental damages, etc.

The system (100) can obtain the load monitoring via strain physical measurements obtained by the optical fiber sensors (120) and the interrogation unit (140). This function assesses whether the aircraft structure is operating within its safe envelope, whether it is likely to develop fatigue damage in some locations of the aircraft (1000) or the single load patches are properly avoided. The optical fiber sensors (120) in this particular case are bonded to the structural parts in key locations of the aircraft (1000). One of the particular advantages of the interrogation unit (140) relates to the suppression capability of undesired effects such as environmental changes. This task is done using specific optical fiber sensors (120) plugged to interrogation unit (140) in the proper optical channels and observing the environmental changes. The optical fiber sensors (120) are located in the aircraft (1000) conveniently close to the strain sensors. The optical fiber sensors (120) acquire the response of the optical parameter (center wavelength) to the variation of temperature and humidity and the software interrogation unit (140) is programmed to remove automatically these effects from the strain sensors which are part of the optical fiber sensors (120).

The vibration measurements functionality can be performed by the optical fiber sensors (120) as vibration sensors, particularly Fiber Bragg Grating (FBG) sensors and fiber Perot sensors. General requirements of vibrations sensors in the aircraft (1000) are from 0Hz to 2000Hz, up to ±20g. The selection of the optical fiber sensors (120) can be done based on the specific requirements in terms of frequency range, sensitivity, resonance frequencies or mass of the sensors. This functionality permits hot spot monitoring for specific locations and global monitoring based on detecting changes in the global response of the structure ranging from modal-based and time-domain analysis approaches. Vibration diagnostics provide a diagnostic tool for possible deterioration of aircraft mechanics such as on the control surfaces.

Impact damage and lightning strike sensors can be obtained by the optical fiber sensors (120). The scope of this network of FBG sensors also bonded to the aircraft structure is to catch and process the guide waves signals produced when impacts or lightning occur in operational service or ground maintenance operations. After processing the guide waves signals, detection of impact/lightning strike, identification of the position and estimation of the impact/lightning strikes severity for prognosis purposes can be carried out using the values of physical parameters provided to the aircraft computer (110).

Stringer disbonding detection can be obtained by the optical fiber sensors (120) (e.g., discrete or distributed FBG sensors) bonded or embedded inside the adhesive lines of composite or metallic parts. These sensors change their responses when this type of damage is produced. The interrogation unit (140) allocates some particular channels to monitor the fibers associated to this monitoring function. Once the damage is detected the information is transmitted to the aircraft computer (110) so that diagnosis and prognostic information of the adhesive lines in the aircraft structures can be generated. This information can be addressed to the optimization of the maintenance programs.

Corrosion diagnostic and prognostic is also undertaken by the use of optical fiber sensors (120) when the corrosion phenomenon is properly characterized. The values of physical parameters such as specific material response, medium, temperature, or stress can be controlled by the optical fiber sensors (120) distributed and located in the corrosion hotspot areas of the aircraft.

The combination of the structural health monitoring functionalities in real time can permit local and global monitoring in the aircraft structure, higher sensitivity to the damage detection in an early step, the use of optical fiber sensors (120) for multiples purposes (strain/load/guide waves detection) and the estimation of the influence of these damage on residual strength of the structure by the application of the right algorithms in the interrogation unit (140).

### FUEL SYSTEM FUNCTIONS

Primarily aircraft fuel system function provides a reliable supply of fuel to the aircraft engines. The aircraft fuel system requires many fuel probes (e.g. 30-40 probes) placed at several locations in the fuel tanks. The measurements are complex as greater gauging accuracies (1-2%) need to be achieved and many variables need to be compensated (e.g. temperature, density, altitude, inclination, etc.). By the interrogation unit (140) and the optical fiber sensors (120) the sensing functions can be more effective since no moving parts can be added to the instrumentation and all the environmental and operational parameters can be compensated by the optical fiber sensors (120) plugged in the interrogation unit (140). The measurement can be also simpler due to the multiplexing and distributing measurement capabilities of the interrogation unit (140) requiring a smaller number of sensors and cables. These routes of the optical fibers (130) for a given tank can be established case by case by means of simulation techniques to model the tank geometry, the orientation and variation of the fuel level in flight. This simulation data is properly stored so that the real measurements as inputs of the algorithms will allow to compute the fuel level and mass. Furthermore, the present invention contributes to reduce redundancy of the fuel gauging systems. The optical fiber sensors (120) can perform the following functions:
- Fuel level measurement by a distributed array of FBG sensors routed along the internal volume of the tank: These sensors present different responses whether they are in contact or not with the fuel and therefore allow to determine the free surface of the liquid fuel.
- Temperature measurement: This measurement performed by FBG sensors is essential together with the density to be able to calculate the mass of the fuel once the volume is calculated.
- Pressure measurement: This measurement is performed by FBG sensors which are bonded to a membrane that is in contact with the FBG sensors.
- Oxygen measurement: To ensure the safe level of oxygen concentration and therefore the proper performance of the inerting system (maximum of 12% for commercial aircraft and 9% for military aircraft (1000)). These sensors can be located in the volume of the internal tank above the surface of fuel that contain a mixture of fuel vapor and air. As this area is ATEX classified, the use of passive the optical fiber sensors (120) is very convenient to avoid any ignition risk.

### HYDRAULIC SYSTEM FUNCTIONS

Hydraulic system is an essential system for many other essential systems in the aircraft (1000) such as the landing gear or the control surfaces. Several physical measurements are required in the hydraulic system to monitor continuously its performance. The contribution of this invention can be essentially for the pressure and temperature measurements of the fluid. The temperature range between -10 to 300 C and the pressure range between atmospheric pressure and 800 psi (pound per square inch) are today feasible and reliable measurements with the optical fiber sensors (120). Again, the multiplexing capability of the optical fiber sensors (120), especially FBG will enable a simple and compact instrumentation of the hydraulic system requiring less cable and optimize routes.

### PNEUMATIC SYSTEM FUNCTIONS

The bleed air is extracted from the engine compressors and after cooling and pressure reduction/regulation is used for a variety of functions in the aircraft (1000) such as air to the cabin conditioning, anti-ice-protection or hot air for rain dispersal. The need of hot air ducts throughout the airframe mandatorily requires an overheat detection system to safeguard against the risk of hot air leaks that would produce structural damage. The conventional detection system consists of electrical resistive sensors adjacent to the air ducts through the aircraft (1000). This function can be also done by multiplexed fiber Bragg grating sensors installed parallel to the ducts. Advantageously, the optical fiber sensors (120) as e.g., Bragg grating sensors provide the leaks detection but also the location where the leak occur and even more the continuous monitoring of the fluid over the duct. The contribution of the present invention to the bleed system and particularly to the overheat detection function is to plug also these optical fiber sensors (120) e.g., FBG to the multifunctional interrogation unit and process the optical wavelength shift to transmit the continuous temperature to the aircraft computer (110) to perform the proper function.

### FIRE DETECTION SYSTEM FUNCTIONS

Fire detection elements are usually installed in risk areas and one of the most likely places for a fire starting is the engine compartment. The contribution of the present invention to the fire detection system consists of a continuous slim stainless-steel tube with a centrally located multiplexed optical fiber sensing that is routed around the fire risk areas. Optical fibers are sensitive to temperature changes. The interrogation unit (140) is in turn connected to a fire control unit where the temperature measurement is processed. One of the particular advantages of the present invention on the fire detection system is the possibility to introduce more than one coaxial sensing fiber for redundant purposes. The optical fiber sensors (120) can be manufactured in a conventional silica waveguide, or also in sapphire, the latter for those cases which higher operating temperatures (above 1000°c) are required.

### ICE SYSTEM FUNCTIONS

Ice system is composed of firstly ice detection sensors (provided by the optical fiber sensors (120) that detect accretion and also anti-ice devices consisting of hot air, electrical resistance or pneumatic synthetic layer with capability to break the ice when the volume is higher than permitted. The contribution of the interrogation unit (140) in the ice system would be detecting the presence of ice via the optical fiber sensors (120). These sensors based on temperature measurement detect the existence not only of standard icing conditions with typically small droplet size, but also of super cooled large droplet conditions.

### ENVIRONMENTAL CONTROL SYSTEM FUNCTIONS

The environmental control system is responsible to keep the optimum temperature, humidity in the aircraft (1000) (for instance cabin or avionic bay) or even oxygen concentrations conditions for the passengers (in the cabin), some of the physical measurements for the environmental control system are the temperature, humidity or oxygen concentration. Therefore, the contributions of the multi-functional is the disposal of the interrogation unit (140) to sense these physical parameters, processing these outputs and provide this information to the aircraft computer (110) to complete the global environmental control functions.

## Claims

1. System (100) for an aircraft (1000) configured to obtain one or more aircraft functionalities, the system comprising an aircraft computer (110), the system (100) **characterized by** comprising:
- one or more optical fiber sensors (120) measuring one or more physical parameters;
- one or more optical fibers (130) connecting the one or more optical fiber sensors (120) to an interrogation unit (140);
- the interrogation unit (140) configured to:
receive light-pulsed data from the one or more optical fiber sensors (120) via the one or more optical fibers (130);
process the light-pulsed data to obtain one or more values of physical parameters by applying a transfer function; and
convert the one or more values of physical parameters into digital data; and
- digital transmission means (150) configured to transmit the digital data to the aircraft computer (110),
wherein the aircraft computer (110) is configured to obtain the one or more aircraft functionalities based on the digital data.

2. The system (100) for an aircraft (1000) according to claim 1, wherein the one or more values of physical parameters comprise strain and/or temperature and/or acceleration and/or ultrasonic guided waves and/or gas detection and the one or more aircraft functionalities are related to structural health monitoring functions.

3. The system (100) for an aircraft (1000) according to the previous claim, wherein the aircraft structural health monitoring functions comprise one or more of the following:
load, overload, damage in a load path, disbond in adhesive lines, structural damage, failures of bearings, impacts, lightning strikes, corrosion damage, maintenance actions, limitations of operational maneuvers, noise, correlations between failures and degradation and parameters in flight.

4. The system (100) for an aircraft (1000) according to claim 1, wherein the one or more values of physical parameters comprise temperature and/or pressure and/or O2 concentration and the one or more aircraft functionalities are related to aircraft fuel system parameters.

5. The system (100) for an aircraft according to the previous claim, wherein the aircraft fuel system parameters comprise one or more of the following:
aircraft level, aircraft safety condition and correlation between operational service and fuel consumption.

6. The system (100) for an aircraft (1000) according to claim 1, wherein the one or more values of physical parameters comprise temperature and/or pressure and the one or more aircraft functionalities are related to aircraft pneumatic system parameters.

7. The system (100) for an aircraft (1000) according to the previous claim, wherein the aircraft pneumatic system parameters comprise one or more of the following:
aircraft leaks and aircraft overheating.

8. The system (100) for an aircraft (1000) according to claim 1, wherein the one or more values of physical parameters comprise temperature, the one or more aircraft functionalities are related to aircraft fire detection system parameters, and the one or more optical fiber sensors (120) comprise silica waveguide or sapphire waveguide for higher operating temperatures above 1000°c.

9. The system (100) for an aircraft (1000) according to the previous claim, wherein the aircraft fire detection system parameters comprise detection of fire in the aircraft (1000).

10. The system (100) for an aircraft (1000) according to claim 1, wherein the one or more physical parameters comprise temperature and the one or more aircraft functionalities are related to ice system parameters of the aircraft (1000).

11. The system (100) for an aircraft (1000) according to the previous claim, wherein the aircraft ice system parameters comprise detection of ice in the aircraft (1000).

12. The system (100) for an aircraft (1000) according to claim 1, wherein the one or more physical parameters comprise temperature and/or humidity and/orice concentration and/or O2 concentration and the one or more aircraft functionalities are related to environmental control system of the aircraft (1000).

13. The system (100) for an aircraft (1000) according to any of the preceding claims, wherein the one or more optical fiber sensors (120) comprise Fiber Bragg Gratings and/or Fiber Perot and/or luminescent sensors and/or distributed sensors based on light scattering and/or twisted glass optical fiber segment suitable for very high temperatures above 1000°c.

14. The system (100) for an aircraft (1000) according to any of the preceding claims, wherein the digital transmission means (150) comprise wired transmission means, in particular Ethernet.

15. The system (100) for an aircraft (1000) according to any of the preceding claims, wherein the one or more optical fibers (130) comprise single mode fibers and/or multimode fibers and/or ribbon fibers and/or multicore fibers.

16. The system (100) for an aircraft (1000) according to any of the preceding claims, further comprising at least one fiber-optic multiplexer configured to process two or more light-pulsed signals comprising the light-pulsed data through a single optical fiber from the one or more optical fibers (130).

17. An aircraft (1000) comprising the system (100) according to any of the preceding claims.

18. Method for obtaining one or more aircraft functionalities in an aircraft (1000), the method comprising:
- measuring one or more physical parameters by one or more optical fiber sensors (120);
- connecting the one or more optical fiber sensors (120) to an interrogation unit (140) by one or more optical fibers (130);
- receiving by the interrogation unit (140) light-pulsed data from the one or more optical fiber sensors (120);
- obtaining by the interrogation unit (140) one or more values of physical parameters by processing the light-pulsed data,
wherein processing the light-the pulsed data comprises applying a transfer function;
- converting by the interrogation unit (140) the one or more values of physical parameters into digital data;
- transmitting by digital transmission means (150) the digital data to an aircraft computer (110); and
- obtaining by an aircraft computer (110) the one or more aircraft functionalities based on the digital data.
